# EUROPÄISCHE PATENTSCHRIFT

(11) **EP 1 355 184 B1**
(45) Veröffentlichungstag und Bekanntmachung des Hinweises auf die Patenterteilung: **05.09.2007**
(21) Anmeldenummer: 02008679.9
(22) Anmeldetag: 18.04.2002
(51) Int. Cl.: G02B 26/08

(54) **Optische Spiegelung durch ein "Integrales System von Mikro-Reflexionselementen"**
Optic reflection by an "integrated system of micro-elements of reflection"
Réflexion optique par un "système intégré d'éléments-micro de réflexion"

(43) Veröffentlichungstag der Anmeldung: 22.10.2003
(73) Patentinhaber: Graf, Peter, Dr., 83139 Söchtenau (DE)
(72) Erfinder: Graf, Peter, Dr., 83139 Söchtenau (DE)
(74) Vertreter: Bossmeyer, Jörg Peter

(56) Entgegenhaltungen:
- EP-A- 0 735 311
- EP-A- 0 831 352
- EP-A- 1 070 637
- EP-A- 1 168 007
- WO-A1-00/03296
- WO-A1-91/02990
- DE-A- 3 624 321
- DE-A- 4 410 994
- DE-A- 19 716 186
- US-A- 3 906 927
- US-A- 4 195 913
- US-A- 5 035 486
- US-A- 6 147 789
- US-A1- 2001 047 212
- PATENT ABSTRACTS OF JAPAN vol. 007, no. 060 (P-182), 12. März 1983 (1983-03-12) & JP 57 207203 A (KUNIHIKO MIYASA), 18. Dezember 1982 (1982-12-18)
- ENGELHARDT M.: 'Installation of 34 mirrors', [Online] Gefunden im Internet: <URL:http://www.ashra.com/photos/mulde08.ht m> [gefunden am 2006-04-05]

## Beschreibung

Die Erfindung betrifft einen Rückspiegel für ein Fahrzeug mit einem integralen System von Mikro-Reflexionselementendie aus nebeneinander liegenden Mikro-Prismen und/oder Mikro-Spiegeln bestehen, wobei die Mikro-Reflexionselemente auf einen Beobachter eingestellt sind, und wobei die Ausrichtung der Mikro-Reflexionselemente so aufeinander abgestimmt ist, dass die von den reflektierenden Flächen gespiegelten Bildpunkte gemeinsam ein Spiegelbild ergeben.

Aus der DE 197 16 186 A1 ist ein strahlungsreflektierendes Schichtmaterial bekannt, das eine Anordnung von nebeneinander angeordneten Mikroprismen aufweist, die einen Abstand zu einer weiteren Anordnung von nebeneinander angeordneten Mikroprismen aufweist. Zwischen den beiden Anordnungen sind Luft und im Abstand zueinander angeordnete metallisch spiegelnde Abstandshalter angeordnet. Das Schichtmaterial kann durch Aufbringen von Glas- oder Kunststoffprismen auf einen Kunststoffträger hergestellt werden und dient der vollständigen Reflexion auftretender Wärmestrahlung.

Die EP 1070 637 A2 beschreibt einen Rückspiegel für ein Kraftfahrzeug mit einem Spiegelelement in dessen Spiegelfläche der nachfolgende Verkehr vom Fahrer beobachtet werden kann, wobei das Spiegelelement aus mehreren Teilspiegeln zusammengesetzt ist. Die Teilspiegel sind schwenkbar gelagert auf einer Grundplatte angeordnet, wobei der Reflexionswinkel jedes Teilspiegels durch Ansteuerung zumindest einer zugeordneten Antriebseinheit verstellbar ist. Die Teilspiegel sind jeweils durch ein elastisches Verbindungselement mit der Grundplatte verbunden, wobei unterhalb der Teilspiegel jeweils vier Elektroden angeordnet sind. Ferner ist der Rückspiegel in einem Gehäuse untergebracht.

Wegen der zwischen den Teilspiegeln und der Grundplatte angeordneten Verbindungselemente und Elektroden, ist ein relativ großer Abstand zwischen der Grundplatte und den Teilspiegeln vorhanden, der zur Dicke des Rückspiegels beiträgt, Zusätzlich ist das Gehäuse vorgesehen, welches die Dicke des Rückspiegels weiter erhöht, so dass im Kraftfahrzeuginnenraum ein nicht unerheblicher Platzbedarf besteht, wenn dieser Rücksiegel als Innenspiegel verwendet wird.

Ausgehend von diesem Stand der Technik liegt der Erfindung die Aufgabe zugrunde, den Rückspiegel der eingangs genannten Art möglichst flach und platzsparend auszubilden.

Diese Aufgabe wird erfindungsgemäß mit einem Rückspiegel nach Anspruch 1 gelöst. Weiterbildungen dieses Rückspiegels sind in den Unteransprüchen gegeben.

Der erfindungsgemäße Rückspiegel für ein Fahrzeug weist ein integrales System von Mikro-Reflexionselementen auf, die aus nebeneinander liegenden Mikro-Prismen und/oder Mikro-Spiegeln bestehen, wobei die Mikro-Reflexionselemente auf einen Beobachter eingestellt sind, und wobei die Ausrichtung der Mikro-Reflexionselemente so aufeinander abgestimmt ist, dass die von den reflektierenden Flächen gespiegelten Bildpunkte gemeinsam ein Spiegelbild ergeben. Die Mikro-Reflexionselemente sind dabei in eine Folie eingeprägt, die auf eine Frontscheibe des Fahrzeugs aufgebracht ist.

In der Zeichnung zeigen:
Bild 1:
   Die vorgeschlagene Technik des 'ISMR'
   1a - Mikro-Prismen
   1b - Mikro-Spiegelelemente
   (Skizziert in Vergrößerung, deren Vergrößerungswert von der technischen Möglichkeit abhängt, möglichst kleine Mikro-Reflexionselemente herzustellen. Alle Skizzen beziehen sich auf mittlere Reflexionswinkel, ohne Berücksichtigung spezieller Brechungszahlen.)
Bild 2:
   Spiegelung durch Mikroprismen
   2a) 90° - Hypotenusen-Reflexion
   2b) 180°-Katheten-Reflexion
Bild 3:
   Mikroreflexionselemente: Spiegelelemente
   (mit Verkleinerung im Sinne eines Panorama-Abbilds)
Bild 4:
   Öffnung der Winkel der Prismen-Katheten für die Reflexion unter 180°
Bild 5:
   Öffnung der 90°-Reflexion durch kleinere Winkel der Prismen-Katheten

### 1.0 Technik der optischen Spiegelung

Eine Technik der optischen Spiegelung, die aus einem integralen System von Mikro-Reflexionselementen besteht, deren Ausrichtung so aufeinander abgestimmt ist, dass die von ihnen gespiegelten Bildpunkt ein kohärentes Spiegelbild auch auf einer irregulären Oberfläche ergeben.

Diese Technik der Spiegelung kann in folgender Form ausgeführt werden:
a) feststehend installiert im Sinne einer spiegelnden Fläche, die auf einen virtuellen Beobachter eingestellt ist und in einem festgelegten Winkel ein kohärentes, verzerrungsfreies und aufrechtes Spiegelbild selbst dann erzeugt, wenn die spiegelnde Fläche selbst optisch irregulär ist, also weder plan noch konkav, konvex geformt ist.

### 2.0 Merkmale

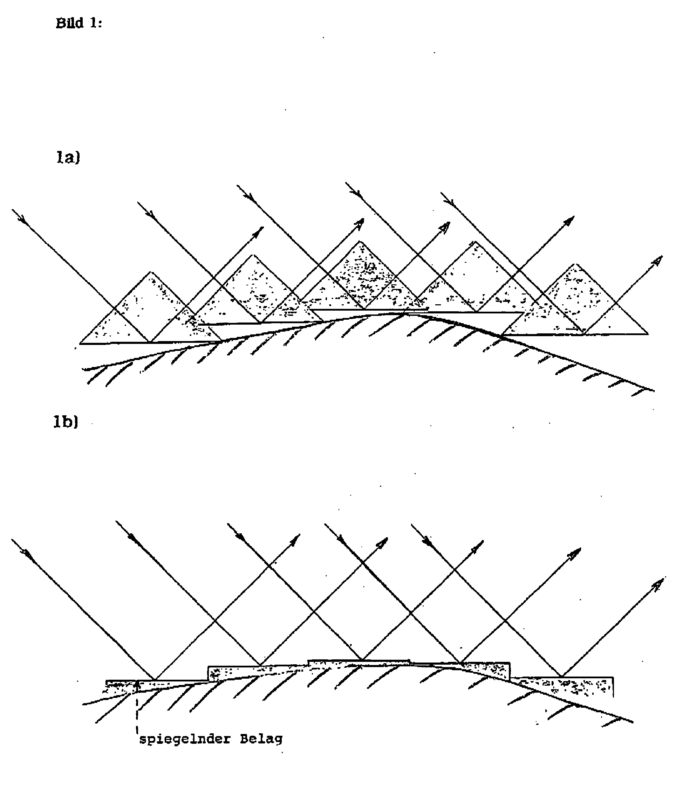

Die vorgeschlagene Technik des 'ISMR' (im folgenden wird das Konzept der Spiegelung durch ein 'Integrales System von Mikro-Reflexionselementen' als 'ISMR' abgekürzt) ist dadurch gekennzeichnet,
- dass die Mikro-Reflexionselemente entweder aus Mikro-Prismen und/oder Mikro-Spiegelelementen bestehen (Abb. 1a,1b),
- dass in der Ausführung a) die Mikro-Reflexionselemente fest justiert so auf den virtuellen Beobachter eingestellt werden, dass im gewünschten Winkel ein aufrechtes und seitenrichtiges Spiegelbild ohne Verzerrung auf einer weithin beliebigen Fläche, die selbst optisch irregulär, also weder plan noch konvex oder konkav ist, erzeugt erden kann,
- dass die Spiegelung durch weitere optische Funktionen (Vergrößerung, Verkleinerung oder Dehnung des Spiegelbildes nach verschiedenen Ebenen) erweitert werden kann. Dieses wird dadurch erreicht, dass die Mikro-Reflexionselemente nach 1a) fest aufeinander abgestimmt so eingestellt werden, dass entsprechend veränderte, konvexe oder konkave Strahlengänge sowohl im Blick auf die Focussierung wie die Ebene der Reflexion entstehen.

### 3.0 Ausführungen der 'ISMR'-Technik

Je nach der Art der gewählten Reflexionselemente besteht das Konzept aus zwei Bauarten, die kombiniert oder getrennt eingesetzt werden können:

### 3.1 Spiegelung durch Mikro-Prismen

Hierbei werden die Prismen so nebeneinander in ein durchsichtiges Material eingefräst, dass die seitlichen Spitzen der Prismen das System miteinander zu einer Einheit verbinden, die in ihrer Form dem Untergrund angepasst ist.

### 3.2 Spiegelung durch Mikro-Reflexionselemente

Hierbei reihen sich Mikro-Spiegel aneinander, eine Unterlage unterhalb der spiegelnden Flächen verbindet die Reflexionselemente miteinander.

### 3.1 Spiegelung durch Mikro-Prismen

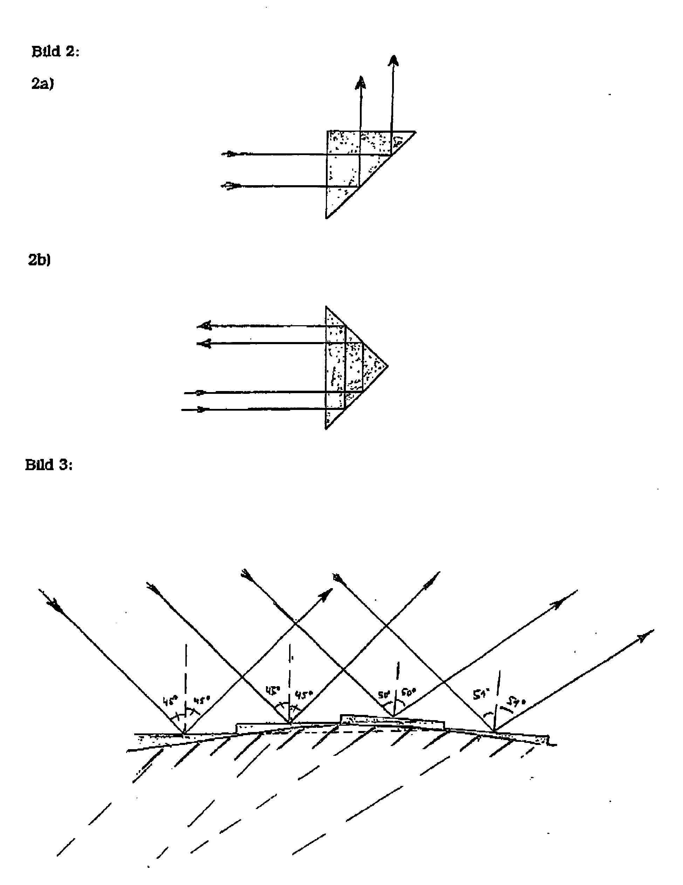

Die Spiegelung durch ein integrales Mikro-Prismensystem ist dadurch gekennzeichnet, dass sie den optischen Effekt der Totalreflexion von gleichschenkelig-rechtwinkligen Prismen je nach Einstrahlung auf die Hypotenusenflächen (90°-Reflexion) oder auf beide Kathetenflächen (180°-Reflexion) nützen. Entsprechend eingestellte und aufeinander abgestimmte Mikro-Prismen erzeugen in einer ausgewählten Ebene der Reflexion, durch Spiegelung entweder im 90° oder 180°-Winkel -, jene Bildpunkte, aus denen sich das Spiegelbild zusammensetzt (Abb.2a,2b).

### 3.2 Spiegelung durch Mikro-Reflexionselemente

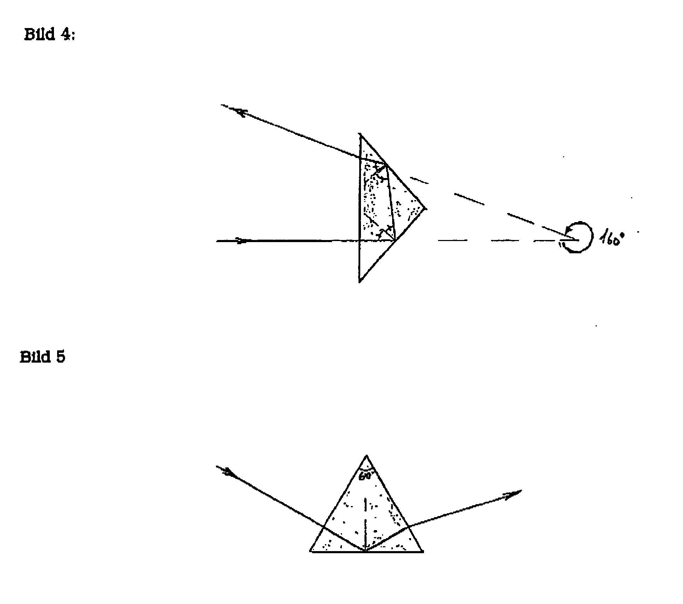

Dieses Verfahren erzielt dieselben optischen Effekte durch eine undurchsichtige Fläche aus Mikro-Spiegelelementen. Es besteht darin, ein System von Mikro-Reflexionselementen herzustellen, die aus möglichst kleinen Teilspiegeln bestehen und jedes Element in der Ebene und im Winkel seiner Spiegelfläche so auszurichten, dass sie zusammen ein kohärentes Spiegelbild erzeugen.
Auch diese Spiegelfläche kann auf irreguläre Ebenen aufgebracht und mit optischen Funktionen der Vergrößerung, Verkleinerung oder Dehnung des Spiegelbildes versehen werden (Abb.3).

Die durch 'ISMR' erzeugten Spiegelbilder sind auf einen virtuellen Beobachter eingestellt und erscheinen nur aus dessen Blickwinkel. Aus anderen Blickwinkeln betrachtet tritt der Spiegeleffekt nicht ein. Das 'ISMR' als Mikro-Prismensystem aus durchsichtiger Materie bleibt für andere Beobachter teilweise oder vollkommen durchsichtig.

### 4.0 Optische Ableitung von 'ISMR'

Das vorgeschlagene System aus Mikro-Prismen verbindet zwei optische Erkenntnisse zu einer neuen Technik der Spiegelung:

### 4.1 Spiegelfeld aus Bildpunkten

Jedes optische Feld der Abbildung kann nach Pixel gerastert aus einer Fülle von möglichst kleinen Bildpunkten zusammengefüge, vergrößert, verkleinert oder verzerrt werden, vorausgesetzt, dass jeder dieser Punkte ein entsprechendes Strahlenbündel herstellt und auf einen virtuellen Beobachter ausgerichtet ist. Innerhalb eines optischen Systems wird der Strahlengang jedes Bildpunktes auf den gewünschten optischen Effekt eingestellt.

### 4.2 Totalreflexion in Prismen

In gleichschenkelig-rechtwinkeligen Glasprismen findet ähnlich wie auf einer spiegelnden Fläche eine Totalreflexion um 90° statt, wenn Lichtstrahlen ab 42° Einfallswinkel und mehr auf die längere Hypotenusenfläche des Prismas fallen. Treten die Strahlen etwa senkrecht durch die Hypotenusenfläche ein, so werden die einfallenden Strahlen zweimal an beiden Kathetenflächen, die 90° zueinander stehen, total reflektiert, so dass sich eine Spiegelung um 180° ergibt (vgl. Abb.2a, 2b).

### 5.0 Spezifische Anwendung der gewählten optischen Effekte

### 5.1 Abstimmung auf die Form des Spiegeluntergrunds

Jedes einzelne der Mikro-Prismen oder Reflexionselemente ist auf den gewünschten Strahlengang eingestellt, der sich aus der Beobachterposition einerseits und dem Ort des Reflexionselements auf der Oberfläche, an der die Spiegelung stattfinden soll, andererseits ergibt. So kann jede beliebige Fläche, die aus einer bestimmten Beobachterposition noch reflektiert, zur Grundlage für ein kohärentes Spiegelbild werden.

### 5.2 Öffnung des Winkels der Katheten-Seiten der Prismen

Die einzusetzenden Mikro-Prismen werden im Falle einer intendierten 180°-Reflexion bzgl. des Winkels, in dem die beiden Prismen-Katheten zueinander stehen, um wenige Grad (90° + n) erhöht, um im Kernbereich des Bildfeldes eine Spiegelung zu erreichen, die um ein Mehrfaches von n unter 180° liegt. Damit wird erreicht, dass der Beobachter jeweils links und rechts an seinen eigenen Augen vorbei nach hinten blicken kann (Abb. 4).

### 5.3 Abstimmung

Im Falle einer Spiegelung an der Hypotenuse der Prismen können ähnliche Öffnungen des 90°-Reflexionswinkels durch entsprechend veränderte Winkel der Seitenflächen der Mikro-Prismen im Verhältnis zur Hypotenusenfläche erreicht werden (Abb.5)

### 6.0 Mögliche Anwendungsbereiche von 'ISMR'

### 6.1 Rückspiegel in Kraftfahrzeugen durch 'ISMR'

Die üblichen Rückspiegel in Fahrzeugen können dadurch ersetzt werden, dass man 'ISMR'-Spiegelflächen innen mit einem minimalen Luft-Abstand auf die oberen Teile der Windsschutzscheibe (rd. 180°- Reflexion) und der Seitenscheibe (rd. 90°- Reflexion) neben dem Fahrer legt. Ebenso kann diese Spiegelfläche per Folie mit einem vergleichbaren Brechungsindex, in die das Mikro-Prismensystem oder die Mikro-Spiegelelemente eingeprägt wurden, auf den oberen Teil der Windschutzscheibe oder deren Rahmen so aufgebracht werden, dass ein Luftpolster bleibt. Insgesamt kann so eine Panoramasicht für die Fahrer hergestellt werden. Die Augenhöhe sowie der Ort der Beobachtung der ISMR-Systeme ist durch den Fahrersitz einzustellen.

### Technische Vorteile von 'ISMR':

- Die Reflexionsflächen müssen nicht wie bisher auf eine bestimmte Ebene und Winkel der Spiegelung eingestellt sein (keine zusätzlichen Teile).
- Für andere Fahrgäste tritt die Spiegelwirkung nicht ein.
- Reflexionsflächen aus Mikro-Prismen bleiben für andere durchsichtig.
- Die Verletzungsgefahr an Spiegeln aus Metall und Glas innen und aussen am Fahrzeug entfällt.
- Der Wiederstandswert des Fahrzeugs ohne Seitenspiegel nimmt deutlich ab.
- Die Reflexionsflächen können mit Filterfolien abgeblendet werden.

### 6.2 Seiten- und Rückspiegelsysteme in Flugzeugen durch 'ISMR'

In Flugzeugen kann an den Seiten- und der oberen Frontscheibe der Pilotenkanzel ein 'ISMR' mit der gewünschten Reflexion zwischen 90° und rd. 170° eingebaut werden, der die Seitenbereiche und den Raum über und hinter dem Flugzeug weithin beobachtbar macht. Aus anderen Blickwinkeln oder Beobachterpositionen, die von dem eingestellten Ort des Beobachters abweichen, bleiben die Scheiben durchsichtig, wenn sie aus Mikro-Prismen hergestellt sind.

## Patentansprüche

1. Rückspiegel für ein Fahrzeug mit einem integralen System von Mikro-Reflexionselementen, die aus nebeneinander liegenden Mikro-Prismen und/oder Mikro-Spiegeln bestehen, wobei die Mikro-Reflexionselemente auf einen Beobachter eingestellt sind, und wobei die Ausrichtung der Mikro-Reflexionselemente so aufeinander abgestimmt ist, dass die von den reflektierenden Flächen gespiegelten Bildpunkte gemeinsam ein Spiegelbild ergeben, **dadurch gekennzeichnet, dass**
- die Mikro-Reflexionselemente in eine Folie eingeprägt sind, die auf eine Frontscheibe des Fahrzeugs aufgebracht ist.

2. Rückspiegel nach Anspruch 1, **dadurch gekennzeichnet, dass** das Fahrzeug ein Kraftfahrzeug ist.

3. Rückspiegel nach Anspruch 1 oder 2, **dadurch gekennzeichnet, dass** die Frontscheibe eine Windschutzscheibe des Fahrzeugs.

4. Rückspiegel nach Anspruch 3, **dadurch gekennzeichnet, dass** die reflektierenden Flächen so auf die Windschutzscheibe aufgebracht sind, dass ein Luftpolster verbleibt.

5. Rückspiegel nach Anspruch 3 oder 4, **dadurch gekennzeichnet, dass** die Folie auf den oberen Teil der Windschutzscheibe aufgebracht ist.

6. Rückspiegel nach einem der vorangehenden Ansprüche, **dadurch gekennzeichnet, dass** die Folie einen vergleichbaren Brechungsindex wie die Mikro-Reflexionselemente aufweist.

7. Rückspiegel nach einem der vorangehenden Ansprüche, **dadurch gekennzeichnet, dass** die reflektierenden Flächen auf einer nicht-planen Oberfläche aufgebracht sind.

8. Rückspiegel nach einem der vorangehenden Ansprüche, **dadurch gekennzeichnet, dass** die Mikro-Reflexionselemente aus Mikroprismen bestehen, wobei der Winkel zwischen den Katheten um wenige Grad erhöht ist.

## Claims

1. Rear-view mirror for a vehicle, with an integral system of micro-reflection elements, consisting of micro-prisms and/or micro-mirrors located next to one another, wherein the micro-reflection elements are adjusted towards an observer, and wherein the alignment of the micro-reflection elements in relation to one another is adjusted in such a way that the image points reflected from the reflecting surfaces together produce a mirror image, **characterised in that**:
- the micro-reflection elements are embossed into a film, which is located on a front screen of the vehicle.

2. Rear-view mirror according to Claim 1, **characterised in that** the vehicle is a motor vehicle.

3. Rear-view mirror according to Claim 1 or 2, **characterised in that** the front screen is a windscreen of the vehicle.

4. Rear-view mirror according to Claim 3, **characterised in that** the reflecting surfaces are located on the windscreen in such a way that an air cushion remains.

5. Rear-view mirror according to Claim 3 or 4, **characterised in that** the film is located on the upper part of the windscreen.

6. Rear-view mirror according to any one of the preceding claims, **characterised in that** the film has a comparable refractive index to the micro-reflection elements.

7. Rear-view mirror according to any one of the preceding claims, **characterised in that** the reflecting surfaces are located on a non-planar surface.

8. Rear-view mirror according to any one of the preceding claims, **characterised in that** the micro-reflection elements consist of micro-prisms, wherein the angle between the small sides is increased by a few degrees.

## Revendications

1. Rétroviseur pour véhicule ayant un système intégré de micro-éléments de réflexion, qui sont constitués de micro-prismes et/ou de micro-miroirs placés l'un à côté de l'autre, dans lequel les micro-éléments de réflexion sont réglés sur un observateur et dans lequel l'orientation des micro-éléments de réflexion est ajustée mutuellement de sorte que les points d'image renvoyés par les surfaces réfléchissantes forment ensemble une image réfléchie, **caractérisé en ce que**
- les micro-éléments de réflexion sont incrustés dans une feuille, qui est appliquée sur une vitre avant du véhicule.

2. Rétroviseur selon la revendication 1, **caractérisé en ce que** le véhicule est un véhicule automobile.

3. Rétroviseur selon la revendication 1 ou 2, **caractérisé en ce que** la vitre avant est le pare-brise du véhicule.

4. Rétroviseur selon la revendication 3, **caractérisé en ce que** l'on applique les surfaces réfléchissantes sur le pare-brise de manière qu'il reste un matelas d'air isolant.

5. Rétroviseur selon la revendication 3 ou 4, **caractérisé en ce que** l'on applique la feuille sur la partie supérieure du pare-brise.

6. Rétroviseur selon l'une quelconque des revendications précédentes, **caractérisé en ce que** la feuille présente un indice de réfraction comparable à celui des micro-éléments de réflexion.

7. Rétroviseur selon l'une quelconque des revendications précédentes, **caractérisé en ce que** l'on applique les surfaces réfléchissantes sur une surface non plane.

8. Rétroviseur selon l'une quelconque des revendications précédentes, **caractérisé en ce que** les micro-éléments de réflexion sont constitués de micro-prismes, dans lesquels l'angle entre les côtés de l'angle droit est augmenté de quelques degrés.
